# FASCICULE DE BREVET EUROPEEN

(11) **EP 3 550 194 B1**
(45) Date de publication et mention de la délivrance du brevet: **08.06.2022**
(21) Numéro de dépôt: 19166859.9
(22) Date de dépôt: 02.04.2019
(51) Int. Cl.: F16L 3/10, F16L 3/22, H02G 3/32, F16L 3/227

(54) **DISPOSITIF DE MAINTIEN D'UN ÉLÉMENT ALLONGÉ**
HALTEVORRICHTUNG EINES LÄNGLICHEN ELEMENTS
DEVICE FOR HOLDING AN ELONGATE ELEMENT

(30) Priorité: 03.04.2018 FR 1852869
(43) Date de publication de la demande: 09.10.2019
(73) Titulaire: ALSTOM Transport Technologies, 93400 Saint-Ouen (FR)
(72) Inventeur: PLANCHOT, Eric, 17230 CHARRON (FR); NATANELIC, Florian, 17730 PORT DES BARQUES (FR)
(74) Mandataire: Lavoix

(56) Documents cités:
- EP-A1- 2 397 736
- EP-A2- 0 191 480
- WO-A1-2017/046570
- GB-A- 2 101 666

## Description

La présente invention concerne une partie d'un dispositif de maintien selon le préambule de la revendication 1.

Un tel dispositif de maintien, également connu sous le nom de blochet, est utilisé pour maintenir en place des éléments allongés, comme des gaines contenant notamment des câbles, des tuyaux ou des tubes, voire directement les câbles eux-mêmes.

Les blochets connus sont généralement constitués de deux pièces moulées ou usinées, articulées l'une à l'autre à une extrémité du blochet, ou emboitées l'une sur l'autre. Les deux pièces sont maintenues en contact par vissage ou par encliquetage, et définissent entre elles un ou plusieurs conduits de réception d'un élément allongé.

Des exemples de dispositifs de maintien sont décrits dans les documents EP 0191480 A2, EP 2397736 A1, WO 2017/046570 A1 et GB 2101666 A.

Ces dispositifs connus ne donnent pas entière satisfaction. En effet, toute modification du nombre, de la taille ou de la nature des éléments à maintenir dans le dispositif nécessite de concevoir et de fabriquer un nouveau dispositif adapté, ce qui nécessite du travail et de la main d'œuvre et engendre des coûts supplémentaires.

Un but de l'invention est de fournir un dispositif de maintien d'éléments allongés pouvant être adapté de manière simple et robuste à une modification du nombre d'éléments reçus, de leurs dimensions ou de leur nature.

A cet effet, l'invention a pour objet une partie d'un dispositif de maintien selon la revendication 1.

L'invention a également pour objet un dispositif de maintien selon la revendication 2.

Selon des modes de réalisation particuliers de l'invention, le dispositif de maintien présente également l'une ou plusieurs des caractéristiques des revendications 3 à 6, prise(s) indépendamment ou selon toute combinaison techniquement réalisable.

L'invention a de plus pour objet un ensemble de maintien selon la revendication 7.

En outre, l'invention a pour objet un véhicule ferroviaire selon la revendication 8.

L'invention a enfin pour objet un procédé d'assemblage selon la revendication 9.

L'invention sera mieux comprise à la lecture de la description qui suit, donnée uniquement à titre d'exemple et faite en référence aux dessins annexés, parmi lesquels :
- la figure 1 est une vue en perspective d'un dispositif de maintien selon un premier mode de réalisation de l'invention ;
- la figure 2 est une vue en perspective de l'une des parties du dispositif de la figure 1 ; et
- la figure 3 est une vue en perspective d'un dispositif de maintien selon un deuxième mode de réalisation de l'invention.

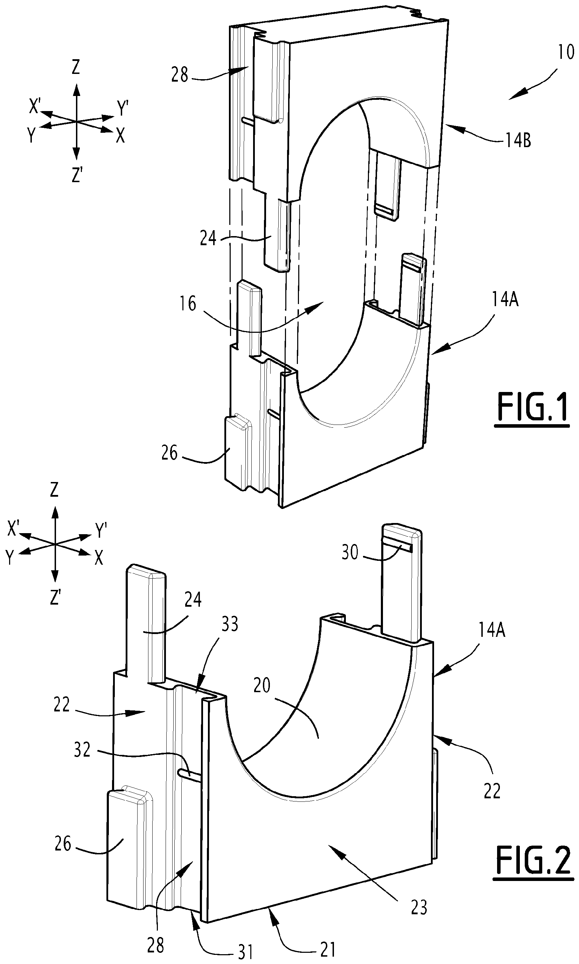

La figure 1 représente un dispositif de maintien 10 pour maintenir au moins un élément allongé (non représenté). Le dispositif de maintien 10 comprend une première partie 14A et une deuxième partie 14B identiques l'une à l'autre, propres à être assemblées l'une à l'autre selon une direction de fermeture Z-Z'.

Avantageusement, les deux parties 14A, 14B sont propres à être assemblées l'une à l'autre selon la direction de fermeture Z-Z' de manière encliquetée, afin de maintenir les deux parties 14A, 14B assemblées lors de l'utilisation du dispositif de maintien 10.

Le dispositif de maintien 10 de la figure 1 est un dispositif simple, c'est-à-dire propre à recevoir un unique élément allongé.

L'élément allongé est par exemple une gaine en matière plastique contenant et protégeant des câbles électriques. La gaine est notamment une gaine annelée, c'est-à-dire une gaine dont une surface externe définit des reliefs en anneaux s'étendant transversalement à une direction d'allongement locale de la gaine.

Les parties 14A, 14B du dispositif de maintien 10 assemblées l'une à l'autre selon la direction de fermeture Z-Z' définissent ensemble au moins un conduit 16 de réception de l'élément allongé. Comme visible sur la figure 1, le dispositif de maintien 10 simple définit un unique conduit 16.

Chaque conduit 16 est sensiblement cylindrique et s'étend selon une direction longitudinale X-X' sensiblement orthogonale à la direction de fermeture Z-Z'. L'élément allongé reçu dans le conduit s'étend sensiblement selon la direction longitudinale X-X' dans le conduit 16 et au voisinage du conduit 16.

Le dispositif de maintien 10 est adapté pour être fixé à un au moins un autre dispositif de maintien 10 identique selon une direction transversale Y-Y' sensiblement orthogonale à la direction de fermeture Z-Z' et à la direction longitudinale X-X', de façon à former un ensemble de maintien (non représenté) propre à recevoir et à maintenir une pluralité d'éléments allongés.

Le dispositif de maintien 10 est adapté pour être fixé à l'autre dispositif de maintien 10 par l'assemblage des deux parties 14A, 14B du dispositif de maintien 10 l'une à l'autre selon la direction de fermeture Z-Z', les parties 14A, 14B de l'autre dispositif de maintien 10 étant préalablement assemblées l'une à l'autre selon la direction de fermeture Z-Z'.

La première partie 14A du dispositif de maintien 10 est représentée sur la figure 2. On notera que cette description s'applique également, de manière réciproque, à la deuxième partie 14B ; pour ce faire, il suffit simplement d'inverser dans cette description les références aux première et deuxième parties 14A, 14B.

La partie 14A comprend un corps 19 définissant une demi-surface 20 de contour du conduit 16, propre à coopérer avec la demi-surface 20 de la deuxième partie pour définir le conduit 16. Cette demi-surface 20 est courbe, notamment en forme de demi-cylindre.

Le corps 19 de la partie 14A définit également deux faces latérales 22, opposées l'une à l'autre et sensiblement orthogonales à la direction transversale Y-Y', deux faces extrémales 23 opposées l'une à l'autre et sensiblement orthogonales à la direction longitudinale X-X', et une face externe 21 opposée à la demi-surface 20 selon la direction de fermeture Z-Z'.

La partie 14A comporte en outre deux guides de fermeture 24, deux tenons 26 et deux rainures 28 permettant l'assemblage des deux parties 14A, 14B du dispositif de maintien 10 l'une à l'autre et la fixation de plusieurs dispositifs 10 entre eux.

Chaque guide de fermeture 24 fait saillie depuis le corps 19, selon la direction de fermeture Z-Z', et affleure une face latérale 22 respective.

Les guides de fermeture 24 sont disposés extérieurement par rapport à la demi-surface 20 selon la direction transversale Y-Y'. Les guides de fermeture 24 sont de plus disposés de manière alternée selon la direction longitudinale X-X', c'est-à-dire que chacun des guides de fermeture 24 est voisin d'une face extrémale 23 respective.

Avantageusement, les guides de fermeture 24 présentent chacun une longueur selon la direction de fermeture Z-Z' sensiblement égale à la moitié de la hauteur de la face latérale 22 selon la direction de fermeture Z-Z'.

Chaque guide de fermeture 24 est propre à être engagé dans une des rainures 28 de la deuxième partie 14B lorsque les deux parties 14A, 14B sont assemblées entre elles.

Avantageusement, chaque guide de fermeture 24 présente une nervure 30 s'étendant sur une surface interne, propre à participer à l'assemblage des deux parties 14A, 14B de manière encliquetée.

Chaque tenon 26 fait saillie depuis une face latérale 22 respective, selon la direction transversale Y-Y'.

Chaque tenon 26 est sensiblement centré sur un plan Y-Z orthogonal à la direction longitudinale X-X', le guide de fermeture 24 affleurant la face latérale 22 depuis laquelle le tenon 26 fait saillie étant également centré sur le même plan Y-Z.

Par « centré », on entend que le guide de fermeture 24 ou le tenon 26 admet le plan Y-Z comme plan médian

Avantageusement, chaque tenon 26 affleure la face externe 21, et s'étend jusqu'à mi-hauteur de la face latérale 22, selon la direction de fermeture Z-Z'.

Chaque tenon 26 est apte à être reçu dans une rainure 28 respective de la première partie 14A de l'autre dispositif de maintien 10 lorsqu'une face latérale 22 de l'une desdites premières parties 14A est accolée à la face latérale 22 de l'autre première partie 14A. La première partie 14A de cet autre dispositif de maintien 10 étant identique à la deuxième partie 14B du dispositif de maintien 10, chaque tenon 26 est également apte à être reçu dans une rainure 28 respective de la deuxième partie 14B lorsqu'une face latérale 22 de l'une desdites parties 14A, 14B est accolée à la face latérale 22 de l'autre partie 14A, 14B.

Chaque rainure 28 est ménagée dans une face latérale 22 respective, et est orientée selon la direction de fermeture Z-Z', parallèlement au tenon 26 faisant saillie depuis la même face 22.

Chaque rainure 28 s'étend notamment sur toute la hauteur de la face latérale 22 selon la direction de fermeture Z-Z' et débouche sur la face externe 21 à travers une première ouverture 31, et à son autre extrémité par une deuxième ouverture 33.

La première ouverture 31 permet l'insertion du tenon 26 correspondant de la deuxième partie 14B dans la rainure 28, par coulissement du tenon 26 à travers la première ouverture 31, selon la direction de fermeture Z-Z'.

La deuxième ouverture 33 permet l'insertion du guide de fermeture 24 correspondant de la deuxième partie 14B dans la rainure 28, par coulissement du guide de fermeture 24 à travers la deuxième ouverture 33, selon la direction de fermeture Z-Z'.

La longueur de chaque rainure 28 selon la direction de fermeture Z-Z' est ainsi sensiblement égale à la somme des longueurs d'un des tenons 26 et d'un de guides de fermeture 24.

Avantageusement, chaque guide de fermeture 24, chaque tenon 26 et chaque rainure 28 présente une section en queue d'aronde, c'est-à-dire que chaque guide de fermeture 24, chaque tenon 26 et chaque rainure 28 est en forme de prisme allongé selon la direction de fermeture Z-Z', et présente une section en trapèze dans un plan X-Y orthogonal à la direction de fermeture Z-Z'.

Pour chaque guide de fermeture 24, le plus grand côté du trapèze est orienté intérieurement par rapport à la direction transversale Y-Y'.

Pour chaque tenon 26, le plus grand côté du trapèze de la queue d'aronde est orienté extérieurement par rapport à la direction transversale Y-Y'.

Pour chaque rainure 28, le plus grand côté du trapèze de la queue d'aronde est orienté intérieurement par rapport à la direction transversale Y-Y'.

Chaque rainure 28 de la première partie 14A est adaptée pour recevoir le guide de fermeture 24 correspondant de la deuxième partie 14B du dispositif de maintien 10 lorsque les parties 14A, 14B sont assemblées selon la direction de fermeture Z-Z'.

De plus, chaque rainure 28 est adaptée pour recevoir le tenon 26 correspondant de la deuxième partie 14B, lorsque les parties 14A, 14B sont accolées par leurs faces latérales 22 respectives selon la direction transversale Y-Y'.

Ce tenon 26 et cette rainure 28 sont conformés de sorte à s'opposer à un retrait du tenon 26 hors de la rainure 28 lorsque le tenon 26 est reçu dans la rainure 28 et les parties 14A, 14B sont sollicitées à l'écart l'une de l'autre selon la direction transversale Y-Y'.

Dans le cas où les rainures 28 des deux parties 14A, 14B reçoivent chacune à la fois le guide de fermeture 24 de l'autre partie 14A, 14B et un des tenons 26 d'une partie 14A, 14B appartenant à un autre dispositif de maintien 10, les guides de fermeture 24 s'étendent intérieurement par rapport aux tenons 26 selon la direction de fermeture Z-Z', de sorte que les deux dispositifs 10 sont maintenus fixés l'un à l'autre tant que leurs deux parties 14A, 14B respectives restent assemblées l'une à l'autre.

Avantageusement, chaque rainure 28 comprend une nervure 32, propre à coopérer avec la nervure 30 du guide de fermeture 24 engagé dans la rainure 28 lors de l'assemblage des deux parties 14A, 14B, de façon à assembler les deux parties 14A, 14B par encliquetage.

Un procédé d'assemblage d'un ensemble de maintien maintenant deux éléments allongés, comprenant deux dispositifs de maintien 10 tels que décrits plus haut va maintenant être décrit.

Le procédé comprend tout d'abord une étape d'assemblage de la première partie 14A d'un premier dispositif de maintien 10 à la première partie 14A d'un deuxième dispositif de maintien 10, selon la direction transversale Y-Y'. Au cours de cette étape, le tenon 26 de chaque première partie 14A faisant saillie depuis la face latérale 22 destinée à venir au contact de l'autre première partie 14A est positionné en regard de la première ouverture 31, respectivement de la deuxième ouverture 33 de l'autre première partie 14A. Puis la première partie 14A du premier dispositif de maintien 10 et la première partie 14A du deuxième dispositif de maintien 10 sont déplacées l'une par rapport à l'autre selon la direction de fermeture Z-Z' jusqu'à ce que leurs faces externes 21 respectives soient alignées, les tenons 26 coulissant dans les rainures 28.

Le procédé comprend ensuite une étape de mise en place d'un élément allongé en contact avec la demi-surface 20 de la première partie 14A du premier dispositif de maintien 10.

Le procédé comprend ensuite étape de fermeture du premier dispositif de maintien 10, par assemblage de la deuxième partie 14B à la première partie 14A du premier dispositif de maintien 10, selon la direction de fermeture Z-Z'.

Au cours de cette étape, chaque guide de fermeture 24 de chaque partie 14A, 14B du premier dispositif de maintien 10 est positionné en face de la deuxième ouverture 33 de la rainure 28 correspondante de l'autre partie 14A, 14B.

Puis, la deuxième partie 14B est déplacée vers la première partie 14A selon la direction de fermeture Z-Z', les guides de fermeture 24 coulissant dans les rainures 28, jusqu'à ce que les nervures 30 et les nervures 32 correspondantes coopèrent pour fixer les deux parties 14A, 14B l'une à l'autre par encliquetage.

Le procédé comprend ensuite une étape de mise en place d'un élément allongé en contact avec la demi-surface 20 de la première partie 14A du deuxième dispositif de maintien 10.

Le procédé comprend enfin une étape de fermeture du deuxième dispositif de maintien 10, similaire à l'étape de fermeture du premier dispositif de maintien 10, à cela près qu'elle comprend en plus le positionnement du tenon 26 faisant saillie depuis la face latérale 22 destinée à venir au contact de chaque deuxième partie 14B en regard de la première ouverture 31, respectivement en regard de la deuxième ouverture 33 de l'autre deuxième partie 14B. Les tenons 26 coulissent ensuite dans les rainures 28 correspondantes lors du déplacement de la deuxième partie 14B du deuxième dispositif de maintien 10.

Le procédé décrit peut être étendu à un ensemble de maintien comprenant n'importe quel nombre de dispositifs de maintien 10, en assemblant tout d'abord leurs premières parties 14A respectives selon la direction transversale Y-Y', puis en positionnant les éléments allongés en contact avec leurs demi-surfaces 20 respectives, et enfin en fermant les dispositifs de maintien 10 les uns après les autres comme décrit plus haut.

Le dispositif de maintien 10 permet une grande modularité dans la réalisation de l'ensemble de maintien. En effet, le nombre total de conduits 16 peut être facilement ajusté en retirant ou en rajoutant un ou plusieurs dispositifs 10 à l'ensemble, sans avoir à recréer un nouvel ensemble adapté à un besoin différent.

De plus, l'ensemble peut comporter des conduits de sections différentes, en fixant ensemble des dispositifs 10 selon plusieurs variantes. La disposition des conduits 16 de sections différentes peut être modifiée simplement en disposant les dispositifs 10 différemment.

De plus, le dispositif de maintien 10 comprend deux parties 14A, 14B identiques, ce qui facilite la conception et la production du dispositif de maintien 10.

Enfin, la fixation de deux dispositifs 10 l'un à l'autre se fait selon la direction de fermeture, ce qui garantit une fixation efficace et robuste lorsque les éléments allongés subissent des contraintes externes.

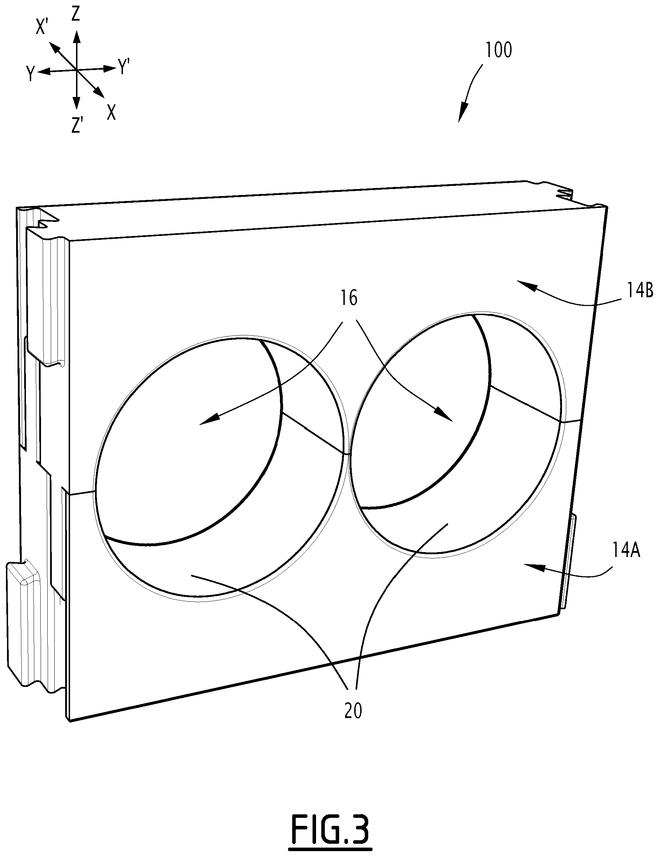

Le dispositif de maintien 100 représenté sur la figure 3 est pour l'essentiel identique au dispositif de maintien 10. Les mêmes numéros de référence sont donc employés ici et sur les figures pour désigner pour ce dispositif de maintien 100 des éléments identiques ou similaires à ceux du dispositif de maintien 10.

Le dispositif de maintien 100 se distingue du dispositif de maintien 10 en ce qu'il s'agit d'un dispositif double, c'est-à-dire propre à recevoir un ou deux éléments allongés, reçus sensiblement parallèles entre eux au voisinage du dispositif de maintien 100.

A cet effet, le dispositif de maintien 100 double définit deux conduits 16, les conduits 16 étant notamment sensiblement parallèles entre eux et à la direction longitudinale X-X'. Par voie de conséquence, chacune des parties 14A, 14B composant ce dispositif de maintien 100 double comprend deux demi-surfaces 20 de contour, chacune formant une partie du contour d'un conduit 16 respectif.

Pour le reste, la description du dispositif de maintien 10 simple donnée ci-dessus s'applique également au dispositif de maintien 100 double.

Du fait de leurs similarités, le dispositif de maintien 100 double peut être facilement assemblé au dispositif de maintien 10 simple pour la constitution d'un ensemble de maintien tel que celui décrit ci-dessus.

Selon une variante non représentée de l'invention, la demi-surface 20 de contour présente au moins un relief destiné à coopérer avec une surface externe de l'élément allongé reçu dans le conduit 16. Ce relief est typiquement constitué d'une pluralité de nervures destinées à coopérer avec la surface d'une gaine annelée pour empêcher un glissement de la gaine annelée dans le conduit 16.

Selon une autre variante non représentée de l'invention, le conduit 16 présente une section non circulaire, par exemple une section sensiblement rectangulaire, notamment une section carrée. Le conduit 16 est dans ce cas adapté pour recevoir un élément allongé non cylindrique, par exemple une poutrelle présentant une section carrée.

On notera que l'invention n'est pas limitée aux seuls dispositifs de maintien simples ou doubles, mais s'étend également à tout dispositif de maintien similaire aux dispositifs 10 et 100 et définissant trois conduits ou plus.

## Revendications

1. Partie (14A, 14B) d'un dispositif de maintien (10, 100) propre à être assemblée à une autre partie (14A, 14B) identique selon une direction de fermeture (Z-Z') pour constituer un dispositif de maintien (10, 100),
la partie (14A, 14B) étant propre à définir au moins un conduit (16) propre à recevoir l'élément allongé avec l'autre partie (14A, 14B) assemblée, le conduit (16) s'étendant selon une direction longitudinale (X-X') sensiblement orthogonale à la direction de fermeture (Z-Z'),
la partie (14A, 14B) présentant deux faces latérales (22) opposées l'une à l'autre selon une direction transversale (Y-Y') sensiblement orthogonale à la direction de fermeture (Z-Z') et à la direction longitudinale (X-X'),
la partie (14A, 14B) comprenant :
- au moins une rainure (28) ménagée dans une première des faces latérales (22), et orientée selon la direction de fermeture (Z-Z'), et
- au moins un tenon (26) faisant saillie depuis la deuxième face latérale (22) selon la direction transversale (Y-Y'), ledit tenon (26) étant apte à être reçu dans une rainure (28) de l'autre partie (14A, 14B) lorsque la première face latérale de la parties (14A, 14B) est accolée à une deuxième face latérale de l'autre partie (14A, 14B),
**caractérisée en ce que** la partie (14A, 14B) comprend en outre au moins un guide de fermeture (24) faisant saillie selon la direction de fermeture (Z-Z'), propre à être engagé dans une rainure (28) de l'autre partie (14A, 14B) lorsque les deux parties (14A, 14B) sont assemblées l'une à l'autre selon la direction de fermeture (Z-Z').

2. Dispositif de maintien (10, 100) pour maintenir au moins un élément allongé, le dispositif de maintien (10, 100) comprenant une première partie (14A) et une deuxième partie (14B) identiques l'une à l'autre et propres à être assemblées l'une à l'autre selon une direction de fermeture (Z-Z'), chaque partie (14A, 14B) étant selon la revendication 1.

3. Dispositif de maintien (10, 100) selon la revendication 2, dans lequel chaque partie (14A, 14B) comprend également une rainure (28) ménagée dans la deuxième face latérale (22) et orientée selon la direction de fermeture (Z-Z'), et un tenon (26) faisant saillie depuis la première face latérale (22) selon la direction transversale (Y-Y'), ledit tenon (26) étant apte à être reçu dans la rainure (28) de l'autre partie (14A, 14B) lorsque la première face latérale de l'une desdites parties (14A, 14B) est accolée à la deuxième face latérale de l'autre partie (14A, 14B).

4. Dispositif de maintien (10, 100) selon la revendication 2 ou 3, dans lequel les deux parties (14A, 14B) sont propres à être assemblées l'une à l'autre selon la direction de fermeture (Z-Z') de manière encliquetée.

5. Dispositif de maintien (10, 100) selon l'une quelconque des revendications 2 à 4, dans lequel le tenon (26) et la rainure (28) sont conformés de sorte à s'opposer à un retrait du tenon (26) hors de la rainure (28) lorsque les parties (14A, 14B) sont sollicitées à l'écart l'une de l'autre selon la direction transversale (Y-Y').

6. Dispositif de maintien (10, 100) selon l'une quelconque des revendications 2 à 5, dans lequel chaque partie (14A, 14B) définit une demi-surface (20) de contour du conduit (16) et présente une face externe (21) opposée à la demi-surface (20), la ou chaque rainure (28) débouchant dans la face externe (21) à travers une ouverture (31), l'ouverture (31) permettant l'insertion du tenon (26) correspondant de l'autre partie (14A, 14B) dans la rainure (28), par coulissement du tenon (26) à travers l'ouverture (31), selon la direction de fermeture (Z-Z').

7. Ensemble de maintien comprenant une pluralité de dispositifs de maintien (10, 100) pour maintenir au moins un élément allongé, le dispositif de maintien (10, 100) comprenant une première partie (14A) et une deuxième partie (14B) identiques l'une à l'autre et propres à être assemblées l'une à l'autre selon une direction de fermeture (Z-Z'), chaque partie (14A, 14B) étant selon la revendication 1,
les dispositifs de maintien (10, 100) étant fixés les uns aux autres selon la direction transversale (Y-Y'), l'ensemble étant propre à recevoir une pluralité d'éléments allongés.

8. Véhicule ferroviaire comprenant une pluralité d'éléments allongés et un ensemble de maintien selon la revendication 7, l'ensemble de maintien recevant les éléments allongés.

9. Procédé d'assemblage d'un ensemble de maintien selon la revendication 7, comprenant les étapes suivantes :
- assemblage des premières parties (14A) des dispositifs de maintien (10, 100) les unes aux autres, selon la direction transversale (Y-Y') ;
- mise en place d'un élément allongé contre la demi-surface (20) de chaque première partie (14A) de chaque dispositif de maintien (10, 100) ;
- assemblage des deuxièmes parties (14B) des dispositifs de maintien (10, 100) aux premières parties (14A), selon la direction de fermeture (X-X').

## Patentansprüche

1. Teil (14A, 14B) einer Haltevorrichtung (10, 100), das geeignet ist, um mit einem anderen identischen Teil (14A, 14B) entlang einer Schließrichtung (Z-Z') zusammengefügt zu werden, um eine Haltevorrichtung (10, 100) zu bilden,
wobei der Teil (14A, 14B) geeignet ist, um mindestens einen Kanal (16) zu definieren, der geeignet ist, um das längliche Element mit dem anderen zusammengefügten Teil (14A, 14B) aufzunehmen, wobei sich der Kanal (16) entlang einer Längsrichtung (X-X') erstreckt, die im Wesentlichen orthogonal zu der Schließrichtung (Z-Z') ist,
wobei der Teil (14A, 14B) zwei Seitenflächen (22) aufweist, die einander in einer Querrichtung (Y-Y') gegenüberliegen, die im Wesentlichen orthogonal zu der Schließrichtung (Z-Z') und zu der Längsrichtung (X-X') ist,
das Teil (14A, 14B) umfassend:
- mindestens eine Nut (28), die in einer ersten der Seitenflächen (22) ausgebildet ist und in der Schließrichtung (Z-Z') ausgerichtet ist, und
- mindestens einen Zapfen (26), der in der Querrichtung (Y-Y') von der zweiten Seitenfläche (22) vorsteht, wobei der Zapfen (26) geeignet ist, um in einer Nut (28) des anderen Teils (14A, 14B) aufgenommen zu werden, wenn die erste Seitenfläche des Teils (14A, 14B) an eine zweite Seitenfläche des anderen Teils (14A, 14B) angebaut ist,
**dadurch gekennzeichnet, dass** das Teil (14A, 14B) ferner mindestens eine Schließführung (24) umfasst, die entlang der Schließrichtung (Z-Z') hervorsteht und geeignet ist, um in einer Nut (28) des anderen Teils (14A, 14B) eingegriffen zu sein, wenn die zwei Teile (14A, 14B) entlang der Schließrichtung (Z-Z') zusammengefügt werden.

2. Haltevorrichtung (10, 100) zum Halten mindestens eines länglichen Elements, die Haltevorrichtung (10, 100) umfassend ein erstes Teil (14A) und ein zweites Teil (14B), die identisch zueinander sind und geeignet sind, um entlang einer Schließrichtung (Z-Z') zusammengefügt zu werden, wobei jedes Teil (14A, 14B) nach Anspruch 1 ist.

3. Haltevorrichtung (10, 100) nach Anspruch 2, wobei jedes Teil (14A, 14B) auch eine Nut (28), die in der zweiten Seitenfläche (22) ausgebildet und in Schließrichtung (Z-Z') ausgerichtet ist, und einen Zapfen (26), der von der ersten Seitenfläche (22) in Querrichtung (Y-Y') hervorsteht, umfasst, wobei der Zapfen (26) geeignet ist, um in der Nut (28) des anderen Teils (14A, 14B) aufgenommen zu werden, wenn die erste Seitenfläche von einem der Teile (14A, 14B) an die zweite Seitenfläche des anderen Teils (14A, 14B) angebaut ist.

4. Haltevorrichtung (10, 100) nach Anspruch 2 oder 3, wobei die zwei Teile (14A, 14B) geeignet sind, um entlang der Schließrichtung (Z-Z') in Schnappverbindung zusammengefügt zu werden.

5. Haltevorrichtung (10, 100) nach einem der Ansprüche 2 bis 4, wobei der Zapfen (26) und die Nut (28) geformt sind, um einem Herausziehen des Zapfens (26) aus der Nut (28) entgegenzuwirken, wenn die Teile (14A, 14B) entlang der Querrichtung (Y-Y') voneinander weg vorgespannt werden.

6. Haltevorrichtung (10, 100) nach einem der Ansprüche 2 bis 5, wobei jedes Teil (14A, 14B) eine halbe Konturfläche (20) des Kanals (16) definiert und eine Außenseite (21) gegenüber der halben Fläche (20) aufweist, die oder jede Nut (28) durch eine Öffnung (31) in die Außenfläche (21) mündet, wobei die Öffnung (31) das Einsetzen des entsprechenden Zapfens (26) des anderen Teils (14A, 14B) in die Nut (28) durch Verschieben des Zapfens (26) durch die Öffnung (31) entlang der Schließrichtung (Z-Z') ermöglicht.

7. Halteanordnung, umfassend eine Vielzahl von Haltevorrichtungen (10, 100) zum Halten mindestens eines länglichen Elements, die Haltevorrichtung (10, 100) umfassend ein erstes Teil (14A) und ein zweites Teil (14B), die identisch zueinander sind und geeignet sind, um entlang einer Schließrichtung (Z-Z') zusammengefügt zu werden, wobei jedes Teil (14A, 14B) nach Anspruch 1 ist,
die Haltevorrichtungen (10, 100) entlang der Querrichtung (Y-Y') aneinander befestigt sind, wobei die Anordnung geeignet ist, um eine Vielzahl von länglichen Elementen aufzunehmen.

8. Schienenfahrzeug, umfassend eine Vielzahl von länglichen Elementen und eine Halteanordnung nach Anspruch 7, wobei die Halteanordnung die länglichen Elemente aufnimmt.

9. Verfahren zum Zusammenfügen einer Halteanordnung nach Anspruch 7, umfassend die folgenden Schritte:
- Zusammenfügen der ersten Teile (14A) der Haltevorrichtungen (10, 100) aneinander entlang der Querrichtung (Y-Y');
- Anbringen eines länglichen Elements an der halben Oberfläche (20) von jedem ersten Abschnitt (14A) jeder Haltevorrichtung (10, 100);
- Zusammenfügen der zweiten Abschnitte (14B) der Haltevorrichtungen (10, 100) mit den ersten Abschnitten (14A) entlang der Schließrichtung (X-X').

## Claims

1. A part (14A, 14B) of a holding device (10, 100) suitable for being assembled with another identical part (14A, 14B) in a closing direction (Z-Z') to form a holding device (10, 100),
the part (14A, 14B) being adapted to define at least one duct (16) adapted to receive the elongate member with the assembled other part (14A, 14B), the duct (16) extending along a longitudinal direction (X-X') substantially orthogonal to the closing direction (Z-Z'),
the part (14A, 14B) having two side faces (22) opposite each other in a transverse direction (Y-Y') substantially orthogonal to the closing direction (Z-Z') and to the longitudinal direction (X-X'),
the part (14A, 14B) comprising:
- at least one groove (28) in a first of the side faces (22), oriented in the closing direction (Z-Z'), and
- at least one stud (26) projecting from the second side face (22) in the transverse direction (Y-Y'), said stud (26) being adapted to be received in a groove (28) of the other part (14A, 14B) when the first side face of the part (14A, 14B) is abutted to a second side face of the other part (14A, 14B),
**characterised in that** the part (14A, 14B) further comprises at least one closure guide (24) projecting in the closure direction (Z-Z'), capable of being engaged in a groove (28) of the other part (14A, 14B) when the two parts (14A, 14B) are assembled to each other in the closure direction (Z-Z')

2. A holding device (10, 100) for holding at least one elongate member, the holding device (10, 100) comprising a first part (14A) and a second part (14B) which are identical to each other and which are adapted to be joined together in a closing direction (Z-Z'), each part (14A, 14B) being as claimed in claim 1.

3. The holding device (10, 100) according to claim 2, wherein each part (14A, 14B) further comprises a groove (28) provided in the second side face (22) and oriented in the closing direction (Z-Z'), and a tenon (26) projecting from the first side face (22) in the transverse direction (Y-Y'), said tenon (26) being able to be received in the groove (28) of the other part (14A, 14B) when the first side face of one of said parts (14A, 14B) is adjoined to the second side face of the other part (14A, 14B).

4. The holding device (10, 100) according to claim 2 or 3, wherein the two parts (14A, 14B) are adapted to be assembled to each other along the closing direction (Z-Z') in a snap-fit manner.

5. The holding device (10, 100) according to any one of claims 2 to 4, wherein the stud (26) and the groove (28) are shaped so as to oppose withdrawal of the stud (26) from the groove (28) when the parts (14A, 14B) are urged away from each other in the transverse direction (Y-Y').

6. The holding device (10, 100) according to any one of claims 2 to 5, wherein each part (14A, 14B) defines a half-surface (20) of the contour of the duct (16) and has an outer face (21) opposite the half-surface (20), **characterised in that** the or each groove (28) opening into the outer face (21) through an aperture (31), the aperture (31) allowing the insertion of the corresponding stud (26) of the other part (14A, 14B) into the groove (28), by sliding the stud (26) through the aperture (31), in the closing direction (Z-Z').

7. A holding assembly comprising a plurality of holding devices (10, 100) for holding at least one elongate member, the holding device (10, 100) comprising a first part (14A) and a second part (14B) which are identical to each other and which are adapted to be joined together in a closing direction (Z-Z'), each part (14A, 14B) being as claimed in claim 1,
the holding devices (10, 100) being fixed to each other in the transverse direction (Y-Y'), the assembly being suitable for receiving a plurality of elongate members.

8. A railway vehicle comprising a plurality of elongate members and a holding assembly as claimed in claim 7, the holding assembly receiving the elongate members.

9. A method of assembling element a holding assembly according to claim 7, comprising the following steps:
- assembly of the first parts (14A) of the holding devices (10, 100) to each other in the transverse direction (Y-Y');
- placing an elongate member against the half-surface (20) of each first part (14A) of each holding device (10, 100);
- assembly of the second parts (14B) of the holding devices (10, 100) to the first parts (14A) in the closing direction (X-X').
